# EUROPEAN PATENT SPECIFICATION

(11) **EP 2 628 669 B1**
(45) Date of publication and mention of the grant of the patent: **22.03.2017**
(21) Application number: 13151230.3
(22) Date of filing: 15.01.2013
(51) Int. Cl.: B62J 9/00, B62J 17/02, B62K 19/46, B62J 17/06

(54) **Structure of front storage compartment of motorcycle**
Struktur eines vorderen Aufbewahrungsfachs eines Motorrads
Structure de compartiment de stockage avant d'un motocycle

(30) Priority: 16.02.2012 TW 101105089
(43) Date of publication of application: 21.08.2013
(73) Proprietor: Kwang Yang Motor Co., Ltd., Kaohsiung City 80794 (TW)
(72) Inventor: Lin, Tsang-Mao, Cambridge, CB1 1AH (GB)
(74) Representative: Horak, Michael

(56) References cited:
- EP-A2- 1 557 348
- EP-A2- 2 361 824

## Description

### (a) Technical Field of the Invention

The present invention generally relates to a structure of front storage compartment of motorcycle, and more particularly to a structure of front storage compartment of motorcycle that improves the usability of the front storage compartment.

### (b) Description of the Prior Art

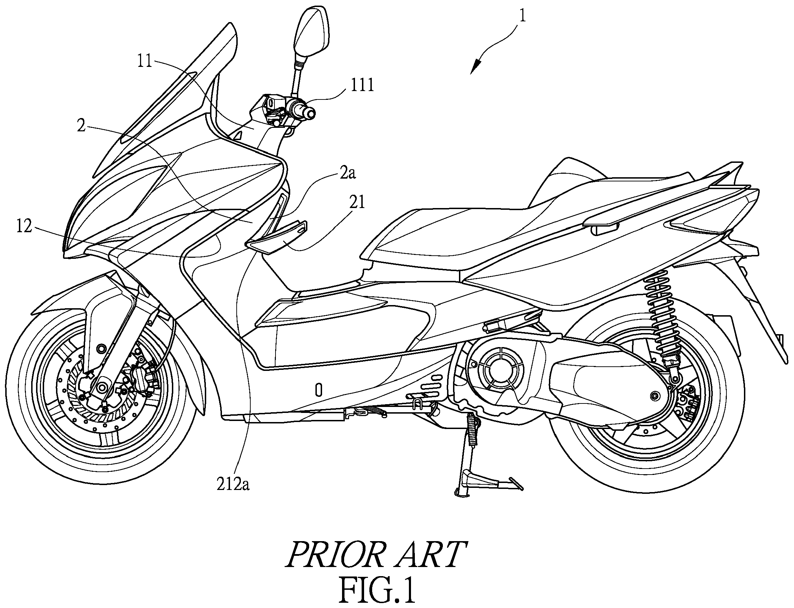

For a two-wheeled vehicle, such as a scooter type motorcycle, as shown in Figure 1, a motorcycle 1 comprises a steering mechanism 11. The steering mechanism 11 comprises a steering handle 111. A back cover board 12 is provided under the steering mechanism 11. The back cover board 12 is provided with a front storage compartment 2. The front storage compartment 2 is closeable by a front storage compartment cover 21.

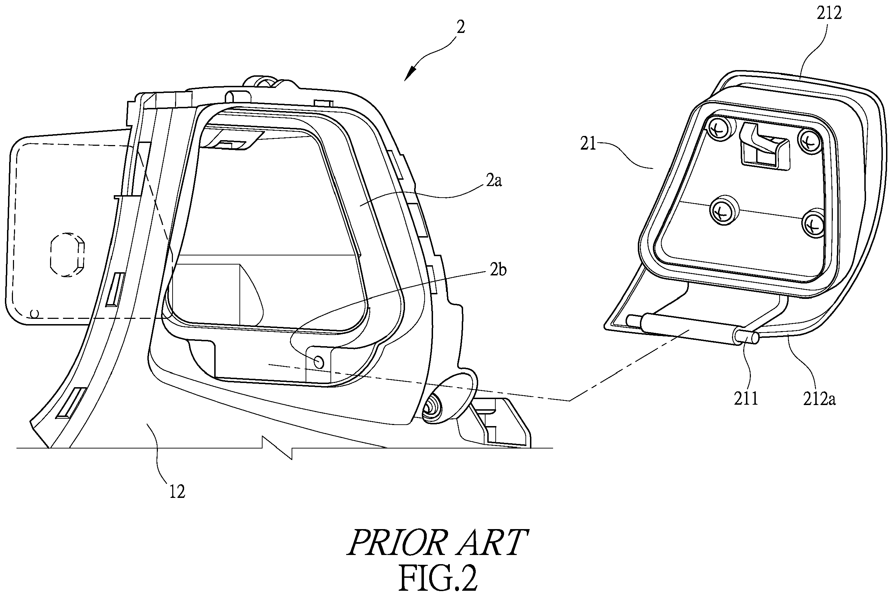

Next, referring to Figures 1 and 2, the known front storage compartment 2 is mounted to the back cover board 12 and the front storage compartment 2 forms an opening 2a in a surface of the back cover board 12. The opening 2a is provided with the front storage compartment cover 21 for selectively closing the front storage compartment 2. The front storage compartment 2 has a lower portion below the opening 2a and having opposite side faces forming a through opening to constitute a pivotal joint seat 2b. The front storage compartment cover 21 has a lower portion having two ends from which rotation axles 211 respectively extend. The rotation axles 211 are insertable into the through opening of the pivotal joint seat 2b of the front storage compartment 2 so that the front storage compartment cover 21 is rotatable about a center defined by the rotation axles 211 for selectively closing the opening 2a of the front storage compartment 2 to set the front storage compartment 2 is a closed condition or an open condition. Further, to allow the front storage compartment cover 21 to completely shield the opening 2a of the front storage compartment 2, the front storage compartment cover 21 has an outer circumference forming an extension 212 projecting outward. With the arrangement of the extension 212, when the front storage compartment cover 21 closes the opening 2a of the front storage compartment 2, gap between the front storage compartment cover 21 and the opening 2a of the front storage compartment 2 can be effectively reduced so as to improve overall marketability of the motorcycle 1 and also to ensure complete closure of the front storage compartment 2.

Although the above described structure of the conventional front storage compartment 2 is effective in ensuring complete closure of the front storage compartment 2, yet due to the arrangement of the extension 212 along the outer circumference of the front storage compartment cover 21, when the front storage compartment cover 21 is released from the front storage compartment 2, a lower end 212a of the extension 212 gets engagement with the pivotal joint seat 2b, making the opening angle of the front storage compartment cover 21 opened from the front storage compartment 2 severely constrained, as shown in Figure 1. Consequently, with the opening angle of the front storage compartment cover 21 from the front storage compartment 2 being constrained in such a way, it is difficult for a motorcycle rider to access articles in the front storage compartment 2 so that the usability of the front storage compartment 2 and the rider's attempts to use the storage compartment become poor.

EP-A-1557348 discloses a lock release operator layout structure in vehicle, in which a motorcycle is shown comprising a vehicle body frame F that comprises a luggage box that comprises a top cover releasably attached to a rear seat of a rider's seat. The rider's seat also comprises a front seat that is connected to a damper rod mounted to the luggage box. The damper rod assists the opening and closing of the front seat. However, EP-A-1557348 does not teach a cover of the luggage box that is coupled to the luggage box through mated slide rail and slidable member.

In view of such shortcomings of the conventional front storage compartment of motorcycle, it is a major issue of the motorcycle industry to provide a structure of front storage compartment that improves the usability of the front storage compartment.

### SUMMARY OF THE INVENTION

The present invention aims to overcome the shortcoming that the cover of the conventional front storage compartment cannot be opened to a large angle thereby making the usability of the front storage compartment poor. The invention is set out in claim 1. Advantageous embodiments of the invention are featured in the dependent claims 2-10.

The primary technical solution of the present invention is providing a structure of front storage compartment of motorcycle. The front storage compartment is mounted to a back cover board of the motorcycle. The front storage compartment comprises at least a compartment body and a cover. The compartment body forms an opening. The compartment body has a lower portion forming a slide rail. The cover has a lower portion forming a pivotal joint seat. The pivotal joint seat is pivotally connected to a slidable member. The slidable member has an end received in the slide rail of the compartment body and an opposite end connected to the pivotal joint seat. With the slide rail being formed in the lower portion of the compartment body and the slide rail slidably receiving the slidable member therein and also with the opposite end of the slidable member being pivotally jointed to the pivotal joint seat of the cover, when the cover is released from the compartment body, the cover can be opened to the maximum available angle to ease the access of articles in the front storage compartment by a rider and thus improving the usability of the front storage compartment.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a schematic view showing a conventional front storage compartment of motorcycle.
FIG 2 is an exploded view of the conventional front storage compartment.
Figure 3 is an exploded view showing a front storage compartment according to the present invention.
Figure 4 is an exploded view showing a cover and a slidable member and a movable piece according to the present invention.
Figure 5 is an exploded view of a cover of the front storage compartment according to the present invention.
Figures 6, 7, and 8 are schematic views illustrating an operation of the front storage compartment according to the present invention.
Figure 9 illustrates a front storage compartment according to another embodiment of the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

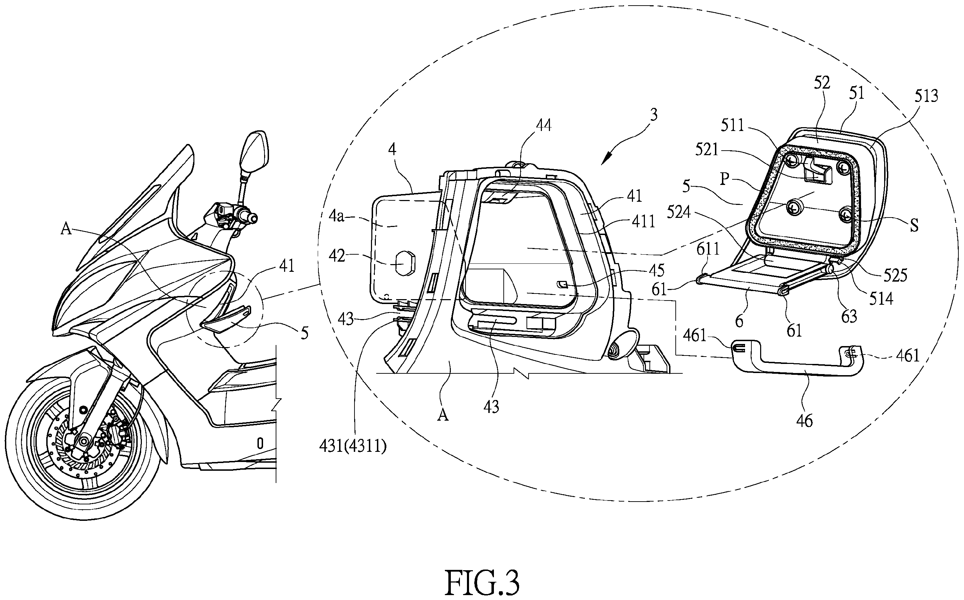

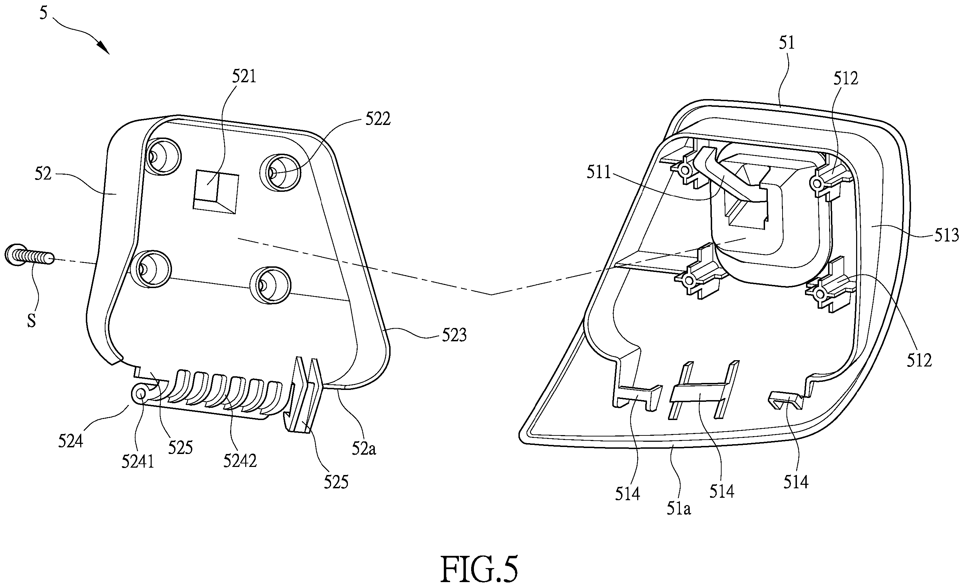

Referring first to Figures 3, 4, and 5, the present invention provides a front storage compartment 3, which is mounted to a back cover board A of a motorcycle. The front storage compartment 3 comprises at least a compartment body 4 and a cover 5.

The compartment body 4 forms an opening 41. The opening 41 allows a rider to reach a hand a hand into the compartment body 4 for accessing articles stored in the compartment. The opening 41 forms a circumferential rim 411 that is raised in a direction toward the cover 5. The compartment body 4 has a bottom end 4a that forms a through hole 42. Specifically, the through hole 42 is arranged in the end of the compartment body 4 that is opposite to the opening 41. The through hole 42 allows installation of a power supply component, such as an electrical charging connector E. The compartment body 4 has a lower portion forming a slide rail 43. The slide rail 43 extends from the opening 41 to the bottom end 4a. The slide rail 43 comprises a stop section 431 formed at a location close to the bottom end 4a. The stop section 431 comprises two opposite projecting blocks 4311 projecting from the slide rail 43. Further, the compartment body 4 has an upper portion forming a lock section 44. The compartment body 4 has left and right portions each having an inside surface forming an insertion aperture 45 at a location close to the opening 41. The insertion aperture 45 functions to receive insertion and installation of a blocking member 46 therein. The blocking member 46 has two ends forming projecting ears 461 respectively projecting therefrom to insert into the compartment body 4, whereby the blocking member 46 may block and prevent tiny objects from falling out of the compartment body 4.

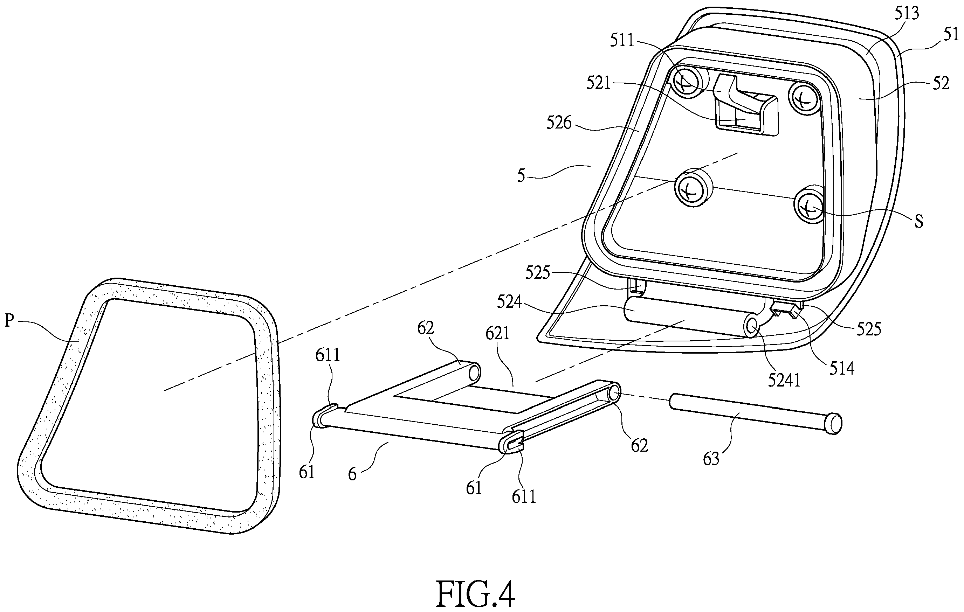

The cover 5 comprises an outer cover member 51 and an inner cover member 52. As shown in Figure 4, the outer cover member 51 comprises a locking pawl 511 and a plurality of mounting posts 512 arranged around the locking pawl 511. An enclosing flange 513 is set outside and surrounding the mounting posts 512. The enclosing flange 513 has a lower portion forming a plurality of holding sections 514.

The inner cover member 52 forms a through opening 521. The through opening 521 allows the locking pawl 511 of the outer cover member 51 to extend therethrough. Further, a plurality of mounting holes 522 is arranged around the through opening 521 in such a way that the mounting holes 522 respectively correspond to the mounting posts 512 of the outer cover member 51, whereby threaded fasteners S are respectively put through the mounting holes 522 to threadingly engage the mounting posts 512 to securely fix the inner cover member 52 to the outer cover member 51. The inner cover member 52 has an outer circumference from which a circumferential projecting reinforcement rim 523 projects toward the outer cover member 51. The projecting rim 523 defines an area that is slightly larger than an area delimited by the enclosing flange 513 of the outer cover member 51 so that the projecting rim 523 may set over and cover outside the enclosing flange 513 of the outer cover member 51. The inner cover member 52 has a lower portion forming a pivotal joint seat 524. The pivotal joint seat 524 forms a pivot hole 5241. The pivotal joint seat 524 also forms a plurality of strengthening ribs 5242 on the back side of the pivot hole 5241. Further, the pivotal joint seat 524 has two ends each forming a retention hook 525. The retention hooks 525 are set in hooked engagement with the holding sections 514 of the outer cover member 51 so as to have the lower end portion 52a of the inner cover member 52 and the lower end portion 51a of the outer cover member 51 to securely joint to each other. The inner cover member 52 forms a receiving groove 526 facing the compartment body 4 and the receiving groove 526 receives and retains therein a leak-proof gasket P. The leak-proof gasket P receives the rim 411 of the opening 41 of the compartment body 4 to tightly position thereon so as to ensure bettered dust and water resistance of the front storage compartment 2.

Also referring to Figures 3 and 4, the pivotal joint seat 542 of the cover 5 is set in pivotal connection with a slidable member 6. The slidable member 6 is fit into the slide rail 43 of the compartment body 4 to be reciprocally slidable within the slide rail 43. The slidable member 6 has an end forming guide sections 61. The guide sections 61 are respectively formed of projecting guide blocks 611 projecting outward from opposite sides of the slidable member 6. The guide sections 61 are engageable with the stop section 431 of the slide rail 43 to show a retained condition, whereby when the guide sections 61 of the slidable member 6 are received in the stop section 431 of the slide rail 43, the stop section 431 of the slide rail 43 provides a retention effect on and thus constraining the guide sections 61 of the slidable member 6 to thus effect positioning of the slidable member 6. The slidable member 6 forms, at an opposite end, axle hole sections 62. Specifically, the axle hole sections 62 are arranged at the ends opposite to the guide sections 61. The axle hole sections 62 define therebetween a recess 621. The recess 621 has a width that is exactly equal to width of the pivotal joint seat 542 of the cover 5, whereby the slidable member 6 is fit, with the recess 621 thereof, over the pivotal joint seat 542 of the cover 5. The axle hole section 62 receives a rotation axle 63 to extend therethrough. With the rotation axle 63 extending through the axle hole section 62 of the slidable member 6 and the pivot hole 5421 of the pivotal joint seat 542 of the cover 5, the slidable member 6 is securely and rotatably jointed to the cover 5.

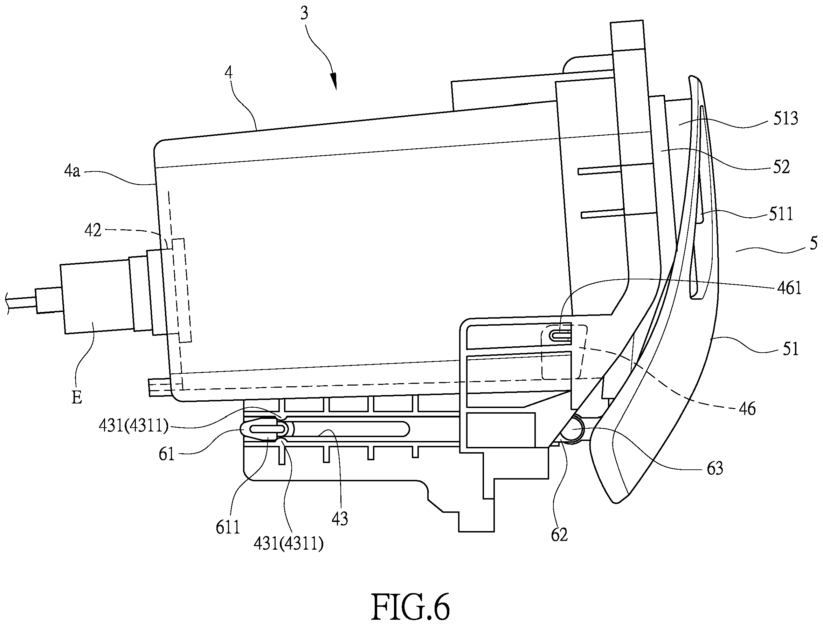

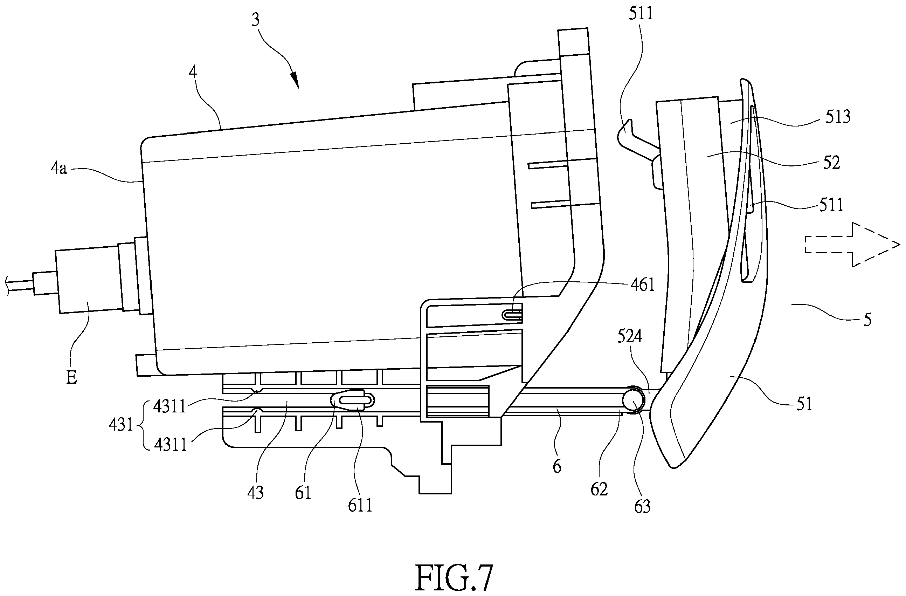

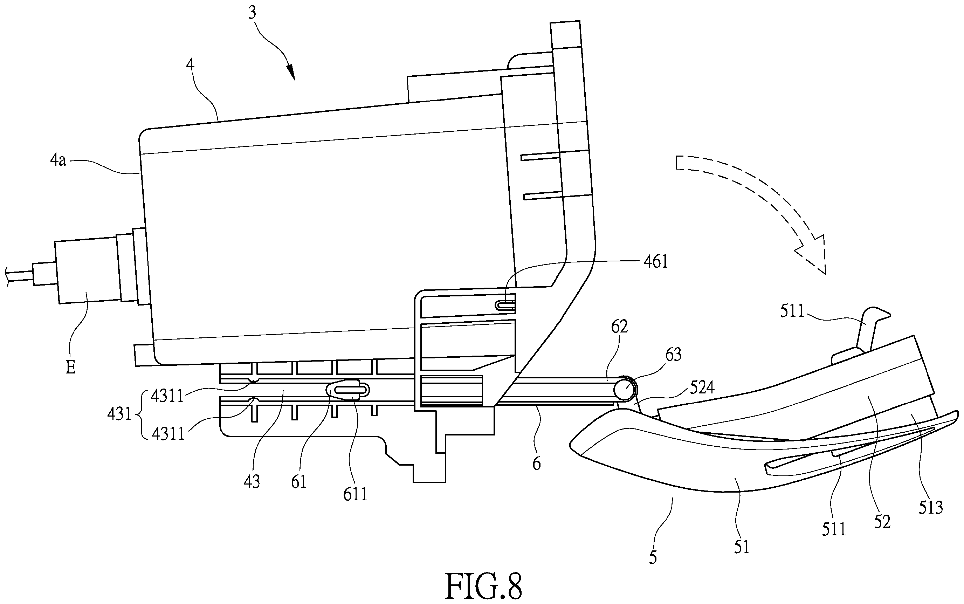

To practice the present invention, as shown in Figures 6, 7, and 8, when the front storage compartment 3 is closed, the locking pawl 511 of the cover 5 is in engagement with the lock section 44 of the compartment body 4. Meanwhile, the guide sections 61 of the slidable member 6 are received in the stop section 431 of the slide rail 43 so that the stop section 431 of the slide rail 43 sets constraint on and effects a retaining engagement with the guide sections 61 of the slidable member 6 so as to retain the slidable member 6 in such a position. Such positioning of the slidable member 6 also achieves retaining of the lower portion of the cover 5 in position and the upper portion of the cover 5 is retained in position by the locking pawl 511 engaging the lock section 44 of the compartment body 4. As such, the cover 5 is securely retained on and covers the opening 41 of the compartment body 4 and thus the compartment body 4 is completely closed as shown in Figure 6. When a rider attempts to access the front storage compartment 3, the rider uses a hand to disengage (through an upward pulling operation) the locking pawl 511 of the cover 5 from the lock section 44 of the compartment body 4 and at the same time draw the cover 5 outward. At the same time, the guide sections 61 of the slidable member 6 are also caused to disengage from the constraint set forth by the stop section 431 of the slide rail 43 and the guide sections 61 of the slidable member 6 are caused by the cover 5 to slide along the slide rail 43. After the slidable member 6 slides along the slide rail 43 for a distance, the cover 5 is spaced from the compartment body 4 so that the cover 5 is driven to tilt downward by the gravity thereof about the rotation axle 63 of the slidable member 6. As such, the cover 5 can be opened to show a substantially horizontal condition with respect to the slidable member 6, as shown in Figures 7 and 8, whereby the opening 41 of the compartment body 4 is set in a fully open condition to allow ease access of articles therein by the rider.

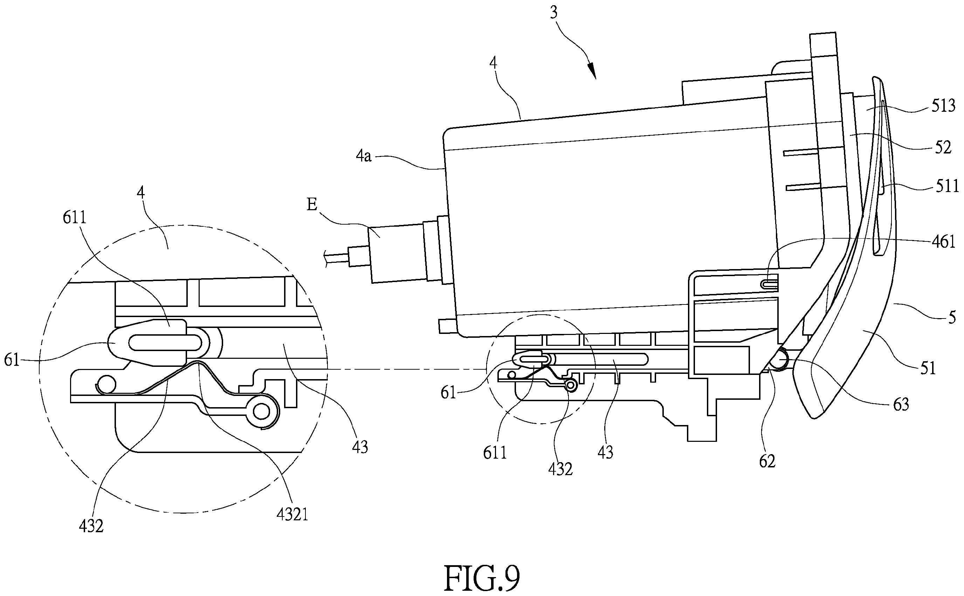

Referring to Figure 9, in an embodiment of the front storage compartment 3 according to the present invention, the stop section 431 of the slide rail 43 is formed of a resilient metal plate 432 that is of substantial resiliency. The resilient metal plate 432 comprises a protrusion portion 4321. The protrusion portion 4321 may set a constraining engagement with the guide sections 61 of the slidable member 6. By forming the stop section 431 with the resilient metal plate 432, abrasion and wear of the guide sections 61 of the slidable member 6 can be reduced.

The efficacy of the present invention is that a slide rail 43 is formed in a lower portion of a compartment body 4 to slidably receive a slidable member 6 inserted therein with an opposite end of the slidable member 6 pivotally jointed to a pivotal joint seat 542 of a cover 5, whereby when the cover 5 is released from the compartment body 4, the cover 5 can be opened to the maximum available angle to ease the access of articles in the front storage compartment 3 by a rider and thus improving the usability of the front storage compartment 3.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing from the scope of the invention defined by the appended claims.

## Claims

1. Motorcycle comprising a front storage compartment, the front storage compartment (3) being mounted to a back cover board (A) of a motorcycle, the front storage compartment (3) comprising at least a compartment body (4) and a cover (5);
the compartment body (4) forming an opening (41),
**characterized in that** the compartment body (4) has a lower portion forming a slide rail (43); and
the cover (5) has a lower portion forming a pivotal joint seat (524), the pivotal joint seat (524) being pivotally connected to a slidable member (6), the slidable member (6) having an end received in the slide rail (43) of the compartment body (4) and an opposite end connected to the pivotal joint seat (524).

2. The motorcycle comprising a front storage compartment according to claim 1, wherein the opening (41) of the compartment body (4) forms a rim (411) that is raised in a direction toward the cover (5), the compartment body (4) having a bottom end (4a) forming a through hole (42), the compartment body (4) having an upper portion forming a lock section (44), the compartment body (4) forming insertion apertures (45) in inside surfaces thereof close to the opening (41), the insertion apertures (45) receiving insertion and installation of a blocking member (46), the blocking member (46) having two ends forming projecting ears (461) projecting therefrom to insert into the insertion apertures (45).

3. The motorcycle comprising a front storage compartment according to claim 1, wherein the slide rail (43) extends from the opening (41) to the bottom end (4a) of the compartment body (4), the slide rail (43) comprising a stop section (431) formed at a location close to the bottom end (4a).

4. The motorcycle comprising a front storage compartment according to claim 3, wherein the stop section (431) comprises two opposite projecting blocks (4311) projecting from the slide rail (43).

5. The motorcycle comprising a front storage compartment according to claim 3, wherein the stop section (431) is formed of a resilient metal plate (432) that is of substantial resiliency, the resilient metal plate (432) comprising a protrusion portion (4321).

6. The motorcycle comprising a front storage compartment according to claim 1, wherein the cover (5) comprises an outer cover member (51) and an inner cover member (52).

7. The motorcycle comprising a front storage compartment according to claim 6, wherein the outer cover member (51) comprises a locking pawl (511), a plurality of mounting posts (512) being arranged around the locking pawl (511), an enclosing flange (513) being set outside and surrounding the mounting posts (512), the enclosing flange (513) having a lower portion forming a plurality of holding sections (514).

8. The motorcycle comprising a front storage compartment according to claim 6, wherein the inner cover member (52) forms a through opening (521), the through opening (521) allowing a locking pawl (511) of the outer cover member (51) to extend therethrough, a plurality of mounting holes (522) being arranged around the through opening (521) in such a way that the mounting holes (522) respectively correspond to the mounting posts (512) of the outer cover member (51), the inner cover member (52) having a lower portion forming a pivotal joint seat (524), the pivotal joint seat (524) forming a pivot hole (5241), the pivotal joint seat (524) having two ends each forming a retention hook (525), the retention hooks (525) being set in hooked engagement with the holding sections (514) of the outer cover member (51).

9. The motorcycle comprising a front storage compartment according to claim 1, wherein the slidable member (6) has an end forming guide sections (61), the guide sections (61) being respectively formed of projecting guide blocks (611) projecting outward from opposite sides of the slidable member (6).

10. The motorcycle comprising a front storage compartment according to claim 1, wherein the slidable member (6) forms the axle hole sections (62) at an end thereof opposite to the guide sections (61), the axle hole sections (62) defining therebetween a recess (621), the recess (621) receiving the pivotal joint seat (524) of the cover (5) therein, the axle hole section (62) receiving a rotation axle (63) to extend therethrough, whereby with the rotation axle (63) extending through the axle hole section (62) of the slidable member (6) and the pivot hole (5241) of the pivotal joint seat (524) of the cover (5), the slidable member (6) is rotatably jointed to the cover (5).

## Patentansprüche

1. Motorrad, das ein vorderes Aufbewahrungsfach umfasst, wobei das vordere Aufbewahrungsfach (3) an eine hintere Abdeckungsplatte (A) eines Motorrades montiert wird und das vordere Aufbewahrungsfach (3) mindestens einen Fachkörper (4) und eine Abdeckung (5) umfasst,
wobei der Fachkörper (4) eine Öffnung (41) bildet,
**gekennzeichnet dadurch, dass** der Fachkörper (4) einen unteren Teil hat, der eine Gleitschiene (43) bildet, und
die Abdeckung (5) einen unteren Teil hat, der einen Drehgelenksitz (524) bildet, wobei der Drehgelenksitz (524) drehbar mit einem gleitenden Element (6) verbunden ist, und wobei das gleitende Element (6) ein Ende hat, das in der Gleitschiene (43) des Fachkörpers (4) aufgenommen wird, und ein gegenüberliegendes Ende hat, das mit dem Drehgelenksitz (524) verbunden ist.

2. Motorrad, das ein vorderes Aufbewahrungsfach nach Anspruch 1 umfasst, wobei die Öffnung (41) des Fachkörpers (4) einen Rand (411) bildet, der zur Abdeckung (5) hin angehoben wird, wobei der Fachkörper (4) ein Bodenende (4a) hat, das ein Durchgangsloch (42) bildet, und der Fachkörper (4) ein oberes Teil hat, das einen Verschlussabschnitt (44) bildet, und der Fachkörper (4) Einschuböffnungen (45) in Innenflächen davon nahe der Öffnung (41) bildet, wobei die Einschuböffnungen (45) den Einschub und die Montage eines blockierenden Elements (46) aufnehmen, und wobei das blockierende Element (46) zwei Enden hat, die vorstehende Ohren (461) ausbilden, die davon vorstehen, um in die Einschuböffnungen (45) eingeschoben zu werden.

3. Motorrad, das ein vorderes Aufbewahrungsfach nach Anspruch 1 umfasst, wobei die Gleitschiene (43) sich von der Öffnung (41) bis zum unteren Ende (4a) des Fachkörpers (4) erstreckt, und die Gleitschiene (43) einen Anschlagbereich (431) umfasst, der an einer Position nahe des unteren Endes (4a) gebildet wird.

4. Motorrad, das ein vorderes Aufbewahrungsfach nach Anspruch 3 umfasst, wobei der Anschlagbereich (431) zwei gegenüberliegende, vorstehende Blöcke (4311) umfasst, die aus der Gleitschiene (43) vorstehen.

5. Motorrad, das ein vorderes Aufbewahrungsfach nach Anspruch 3 umfasst, wobei der Anschlagbereich (431) aus einer elastischen Metallplatte (432) gebildet wird, die wesentlich elastisch ist, und wobei die elastische Metallplatte (432) einen Vorsprungteil (4321) umfasst.

6. Motorrad, das ein vorderes Aufbewahrungsfach nach Anspruch 1 umfasst, wobei die Abdeckung (5) ein äußeres Abdeckungselement (51) und ein inneres Abdeckungselement (52) umfasst.

7. Motorrad, das eine vorderes Aufbewahrungsfach nach Anspruch 6 umfasst, wobei das äußere Abdeckungselement (51) eine Verriegelungsklinke (511) umfasst, eine Vielzahl von Montagepfosten (512) um die Verriegelungsklinke (511) angeordnet sind, und sich ein einschließender Flansch (513) außerhalb befindet und die Montagepfosten (512) umgibt, wobei der einschließende Flansch (513) einen unteren Teil hat, der eine Vielzahl von Haltebereichen (514) bildet.

8. Motorrad, das ein vorderes Aufbewahrungsfach nach Anspruch 6 umfasst, wobei das innere Abdeckungselement (52) eine Durchgangsöffnung (521) bildet, die Durchgangsöffnung (521) es zulässt, dass eine Verriegelungsklinke (511) des äußeren Abdeckungselements (51) durch sie verlaufen kann, eine Vielzahl von Montagelöchern (522) so um die Durchgangsöffnung (521) angeordnet ist, dass die Montagelöcher (522) den Montagepfosten (512) des äußeren Abdeckungselements (51) entsprechen, und wobei das innere Abdeckungselement (52) einen unteren Teil umfasst, der ein Drehgelenksitz (524) bildet, wobei der Drehgelenksitz (524) ein Drehgelenkloch (5241) bildet, und der Drehgelenksitz (524) zwei Enden hat, die jeweils einen Rückhaltehaken (525) halten, wobei die Rückhaltehaken (525) mit den Haltebereichen (514) des äußeren Abdeckungselements (51) verhakt sind.

9. Motorrad, das ein vorderes Aufbewahrungsfach nach Anspruch 1 umfasst, wobei das gleitende Element (6) ein Ende hat, dass Führungsbereiche (61) bildet, und wobei die Führungsbereiche (61) entsprechend aus vorstehenden Führungsblöcken (611) gebildet sind, die von den gegenüberliegenden Seiten des gleitenden Elements (6) nach außen vorstehen.

10. Motorrad, das ein vorderes Aufbewahrungsfach nach Anspruch 1 umfasst, wobei das gleitende Element (6) die Achslochbereiche (62) an einem Ende davon gegenüber den Führungsbereichen (61) bildet, und wobei die Achslochbereiche (62) dazwischen eine Aussparung (621) definieren, wobei die Aussparung (621) den Drehgelenksitz (524) der Abdeckung (5) darin aufnimmt und der Achslochbereich (62) eine Rotationsachse (63), die dadurch verläuft, aufnimmt, wodurch mithilfe der Rotationsachse (63), die durch den Achslochbereich (62) des gleitenden Elements (6) verläuft und das Drehgelenkloch (5241) des Drehgelenksitzes (524) der Abdeckung (5) das gleitende Element (6) drehbar mit der Abdeckung (5) verbunden wird.

## Revendications

1. Motocycle comprenant un compartiment de stockage avant, le compartiment de stockage avant (3) étant monté sur une plaque de recouvrement arrière (A) d'un motocycle, le compartiment de stockage avant (3) comprenant au moins un corps de compartiment (4) et une couvercle (5);
le corps de compartiment (4) formant une ouverture (41),
**caractérisé en ce que** le corps de compartiment (4) a une partie inférieure formant une glissière (43); et
le couvercle (5) a une partie inférieure formant un logement de joint pivotant (524), le logement de joint pivotant (524) étant relié de manière pivotante à un élément coulissant (6), l'élément coulissant (6) ayant une extrémité reçue dans la glissière (43) du corps de compartiment (4) et une extrémité opposée reliée au logement de joint pivotant (524).

2. Motocycle comprenant un compartiment de stockage avant selon la revendication 1, où l'ouverture (41) du corps de compartiment (4) forme un rebord (411) qui est soulevé dans une direction vers le couvercle (5), le corps de compartiment (4) ayant une extrémité inférieure (4a) formant un trou traversant (42), le corps de compartiment (4) ayant une partie supérieure formant une section de verrouillage (44), le corps de compartiment (4) formant des ouvertures d'insertion (45) sur des surfaces intérieures de celui-ci près de l'ouverture (41), les ouvertures d'insertion (45) recevant l'insertion et l'installation d'un élément de blocage (46), l'élément de blocage (46) ayant deux extrémités formant des oreilles saillantes (461) saillant de celui-ci pour être insérées dans les ouvertures d'insertion (45).

3. Motocycle comprenant un compartiment de stockage avant selon la revendication 1, où la glissière (43) s'étend de l'ouverture (41) à l'extrémité inférieure (4a) du corps de compartiment (4), la glissière (43) comprenant une section d'arrêt (431) formée sur une position près de l'extrémité inférieure (4a).

4. Motocycle comprenant un compartiment de stockage avant selon la revendication 3, où la section d'arrêt (431) comprend deux blocs saillants opposés (4311) saillant de la glissière (43).

5. Motocycle comprenant un compartiment de stockage avant selon la revendication 3, où la section d'arrêt (431) est formée d'une plaque métallique résiliente (432) qui est d'une résilience substantielle, la plaque métallique résiliente (432) comprenant une partie saillante (4321).

6. Motocycle comprenant un compartiment de stockage avant selon la revendication 1, où le couvercle (5) comprend un élément de couvercle extérieur (51) et un élément de couvercle intérieur (52).

7. Motocycle comprenant un compartiment de stockage avant selon la revendication 6, où l'élément de couvercle extérieur (51) comprend un cliquet de verrouillage (511), une pluralité de poteaux de montage (512) étant disposés autour du cliquet de verrouillage (511), un rebord de clôture (513) étant placé à l'extérieur et entourant les poteaux de montage (512), le rebord de clôture (513) ayant une partie inférieure formant une pluralité de sections de soutien (514).

8. Motocycle comprenant un compartiment de stockage avant selon la revendication 6, où l'élément de couvercle intérieur (52) forme une ouverture traversante (521), l'ouverture traversante (521) permettant à un cliquet de verrouillage (511) de l'élément de couvercle extérieur (51) de s'étendre à travers de celle-ci, une pluralité de trous de montage (522) étant disposés autour de l'ouverture traversante (521) de façon à ce que les trous de montage (522) correspondent respectivement aux poteaux de montage (512) de l'élément de couvercle extérieur (51), l'élément de couvercle intérieur (52) ayant une partie inférieure formant un logement de joint pivotant (524), le logement de joint pivotant (524) formant un trou de pivotement (5241), le logement de joint pivotant (524) ayant deux extrémités formant chacune un crochet de rétention (525), les crochets de rétention (525) étant positionnés en accrochage à crochet avec les sections de soutien (514) de l'élément de couvercle extérieur (51).

9. Motocycle comprenant un compartiment de stockage avant selon la revendication 1, où l'élément coulissante (6) a une extrémité qui forme des sections de guidage (61), les sections de guidage (61) étant formées respectivement de blocs de guidage saillantes (611) faisant saillie vers l'extérieur depuis des côtés opposés de l'élément coulissante (6).

10. Motocycle comprenant un compartiment de stockage avant selon la revendication 1, où l'élément coulissante (6) forme les sections de trou d'axe (62) à une extrémité de celui-ci opposée aux sections de guidage (61), les sections de trou d'axe (62) définissant entre elles un renfoncement (621), le renfoncement (621) recevant le logement de joint pivotant (524) du couvercle (5) à l'intérieur, la section de trou d'axe (62) recevant une axe de rotation (63) pour s'étendre à travers de celle-ci, de manière qu'avec l'axe de rotation (63) s'étendant à travers la section de trou d'axe (62) de l'élément coulissant (6) et le trou de pivotement (5241) du logement de joint pivotant (524) du couvercle (5), l'élément coulissante (6) est relié de manière rotative au couvercle (5).
